**Europäisches Patentamt**

**European Patent Office**

**Office européen des brevets**

(19)

(11) Publication number: **0 006 079**
**B1**

(12) **EUROPEAN PATENT SPECIFICATION**

(45) Date of publication of patent specification: **25.05.83**

(51) Int. Cl.³: **G 07 C 1/30, G 07 F 17/24**

(21) Application number: **79850047.6**

(22) Date of filing: **18.05.79**

(54) **A motor vehicle parking system.**

(30) Priority: **25.05.78 SE 7805975**

(43) Date of publication of application:
**12.12.79 Bulletin 79/25**

(45) Publication of the grant of the patent:
**25.05.83 Bulletin 83/21**

(84) Designated Contracting States:
**AT BE CH DE FR GB IT NL**

(56) References cited:
**DE - A - 2 429 332**
**DE - A - 2 613 931**
**US - A - 3 959 632**

(73) Proprietor: **Lövanger Elektronic Marketing AB**
**Box 394**
**S-591 24 Motala (SE)**

(72) Inventor: **Treun, Karl Bengt**
**Lillgarden Overby**
**S-150 12 Stjärnhov (SE)**
Inventor: **Swahn, Nils Henrik**
**Granevägen 8**
**S-182 65 Djursholm (SE)**

(74) Representative: **Lindblom, Erik J.**
**Caroline Östbergs väg 5**
**S-122 35 Enskede (SE)**

Courier Press, Leamington Spa, England.

# A motor vehicle parking system

## Field of the present invention

This invention refers to a motor vehicle parking system. This system is based upon an utilization of three different units working together or interrelated to each other but these are physically separated units, namely;

a) a sign for indicating a parking space,
b) a parking meter belonging to and/or at the disposal of, the vehicle and its driver,
c) a terminal, by which any information accumulated in the parking meter can be evaluated.

## Brief description of the prior art.

There is in itself previously known systems for the purchase of service for the utilization of a parking space, for example, which consists of a device for the storage of service charges at the disposal of the purchaser, and of another implement not at the purchaser's disposal, which registers in the storage of charges device information about the amount purchased. The implement not at the buyer's disposal exhibits an instrument that identifies to the system pertaining the devices for storage of service fees. Each of these devices exhibits an instrument in return, for example a decoding instrument, which, depending on information from the implement, registers back information to it, which activates in the implement's available circuit, a decoder for instance, which in turn sends significant information back to the device. After the significant information is checked, registering of the amount purchased is allowed to enter in the device's instrument.

The above mentioned system is described more in detail in the US Patent Specification 3 959 632 and enables an advance purchase of a parking service.

In the DE—OS 26 13 931 is described an electronically controlled device for indicating the time duration of a parking using a clock in the vehicle and an information from the ignition system.

In the DE—OS 24 29 332 is described a device showing the time duration of a parking using a parking meter belonging to the vehicle and its driver, which is controlled electronically.

## Objects of the present invention

The invention in question utilizes the previous system described in US Patent 3959632 using a parking meter at the vehicle owner's disposal, as well as a terminal, for the evaluation of the information stored, but in addition the present invention supplies information in order to obtain an effectively workable parking system. It requires a special sign for indicating an information about a parking space. This information is containing significant information.

A parking system for motor vehicles herein described features in comparison with the usual parking meters for coin introduction, or the automatic ticket system, whereupon the introduction of coins must take place at a central parking meter or the parking lot on every occasion, the advantage that it can function under the principle of advanced payment, at the same time that once the meter is fed with information it is possible to utilize the system without any need of coins.

As far as the differences in the economic accounting between a parking meter functioning under coin introduction, or an automatic ticket system, and the presently invented system, it is totally evident that by the former parking- or automatic ticket- systems coins must be collected, which means that coins must be gathered and counted.

As described accounting can be performed in such a way that upon the "loading" or filling of the parking meter main storage device at the terminal, an amount is payed for the information in sub storage devices required, according to the principle of advance payment. When the meter is brought back to the terminal after having been used, its information is evaluated at the terminal, and through this information the accounting can take place in a simple way. It is also possible by the accounting, to differentiate between a plurality of payment receivers who serviced at various parking occasions. The accounting system becomes significantly easier through this procedure. Moreover, the presently introduced system can be utilized with or without advanced payment.

The present invention provides for an invaluably greater flexibility for motorists as well as for payment receiver than with the previously known parking system, as illustrated by the tables.

Table 1 indicates the flexibility that the present system gives to the payment receiver. Table 2 shows the flexibility that the present system provides for the motorists.

### TABLE 1

| Flexibility | A central or mounted parking meter with coin introduction. | A system acting under the present invention. |
|---|---|---|
| Parking costs. | Change in the introduction of coins, time mechanism or exchange of whole meter. | Change of a given information attached to the sign. |
| Maximum parking time allowed. | Change of sign information. | "    " |
| New payment receiver. | Eventual exchange of available equipment. | "    " |
| Physical placement of parking space. | Putting up, or removal of central or mounted parking meter, ticket automats, and signs. By tickets automats, even new installation. | Putting up, or removal of sign alone. |
| Index regulating | In practice not possible to carry out with existing products. | Decisions upon new price takes place by changing information (code) on the sign, or only by public announcement of index raise for all rates. |
| Amount of flexibility | Circumscribed flexibility at considerable costs. | High flexibility at limited costs. |
| | Mechanical or electronic changes in the meter and the automats. | None intervention in the meter and/or the terminal. |

### TABLE 2

| | | |
|---|---|---|
| How long time should the parking last, what does it cost? | The motorist must decide parking time and pay thereafter, which may lead to overpayment, or to the risk of getting a parking fee | The parking time does not have to be decided previously. Payment is made only for the time utilized. |
| How is payment made? | Often, the motorist doesn't have the proper coinage, and a "valid" ticket can't be obtained. | The motorist is independent of change coins, and gets a receipt for parking costs when the meter is "charged" at the terminal. |
| Handling, and convenience? | Different procedures with different parking places, and with different payment receiver. Often inconvenient because the motorist must walk a long distance to get the parking receipt and return it to the car. | Simple handling. The parking meter is utilized in the same way on all parking places, including those with different payment procedures. |

## Objects of the present invention

The parking system related to the present invention has as its object to resolve a difficult problem with regards to the so called farmer parking in the inner city. Through the invention in question it becomes possible to allow the automobile to stay in a particular housing area the whole day and night simply by introducing the information given by the sign in to the parking meter.

It is an object of this invention to construct the parking meter in such a manner that the personnel in charge can with the help of a signal unit check if the parking meter is functioning, and if the correct number has been set.

Thus the present motor vehicle parking system comprising;

a) a sign means for displaying coded parking information relating to the conditions concerning
a1) parking time,
a2) cost,
a3) payment and, optionally,
a4) permission to park, for a vehicle using a parking space associated with said sign means,
b) parking meter means and
c) terminal means, having means for connecting said parking meter means thereto for receiving and processing stored parking information.

The novel features are that the parking meter means has data entry means for entering the parking information displayed on said sign means, and further

cipher indicator means, in the form of a display, displaying the information entered on said data entry means,

a main memory means, for receiving and storing a predetermined number of information bits,

accounting memory means comprising at least one accounting memory connected to selectively receive at least some of the information bits from said main memory means for storing said information bits so received,

a time meter and a microprocessor or electronic circuit, for selectively transferring at least some of the information bits from said main memory means to said accounting memory means during the time period in which the vehicle is parked in said parking space in accordance with said displayed information, and

debit indicator means for indicating that said parking meter means is operating in accordance with the information displayed on said cipher indicator.

Brief description of the accompanying drawing

Those of the invention's most significant particularities will be described with reference to the attached drawings in which,

Figure 1 shows how the three units in the system function with each other, and how it is possible to obtain simple accounting;

Figure 2 shows four automobiles parked having a parking meter assigned said parking zone, and where a sign with significant information is shown,

Figure 3 shows in perspective a parking meter,

Figure 4 shows a partially cut-away view of the parking meter as shown in Figure 3,

Figure 5 shows a relationship between the parking meter and the terminal,

Figure 6 shows how the present parking system can be used in day time or night time with the help of the assigned sign, and

Figure 7 shows possibility to, with the aid of a signal unit, check that the parking meter is functioning, and that the proper tariff number is installed.

Description of a preferred embodiment

The present invention refers to a motor vehicle parking system. This system utilizes three interrelated but physically separated units, as follows:

a) A sign means "A" for displaying coded parking information 10 relating to the conditions concerning
a1) parking time,
a2) cost,
a3) payment and, optionally,
a4) permission to park, for a vehicle using a parking space associated with said sign means "A".
b) Parking meter means "B".
c) Terminal means "C", having means for connecting said parking meter means "B" thereto for receiving and processing stored parking information.

In order to be able to fill the above mentioned demands it is required that each parking meter, pertaining to the vehicle or being at the disposal of the vehicle's owner, be equipped with a decoding instrument, so as to be able to receive the applied information from the sign, evaluate its code, and distinguish the criteria represented by the code. It is also necessary that the parking meter in question has capacity to store the pertaining contents of the parking information, as well as that the terminal be built with the capacity to evaluate, and distinguish between the information that the parking meter recorded last from that which has been stored during previous parking opportunities.

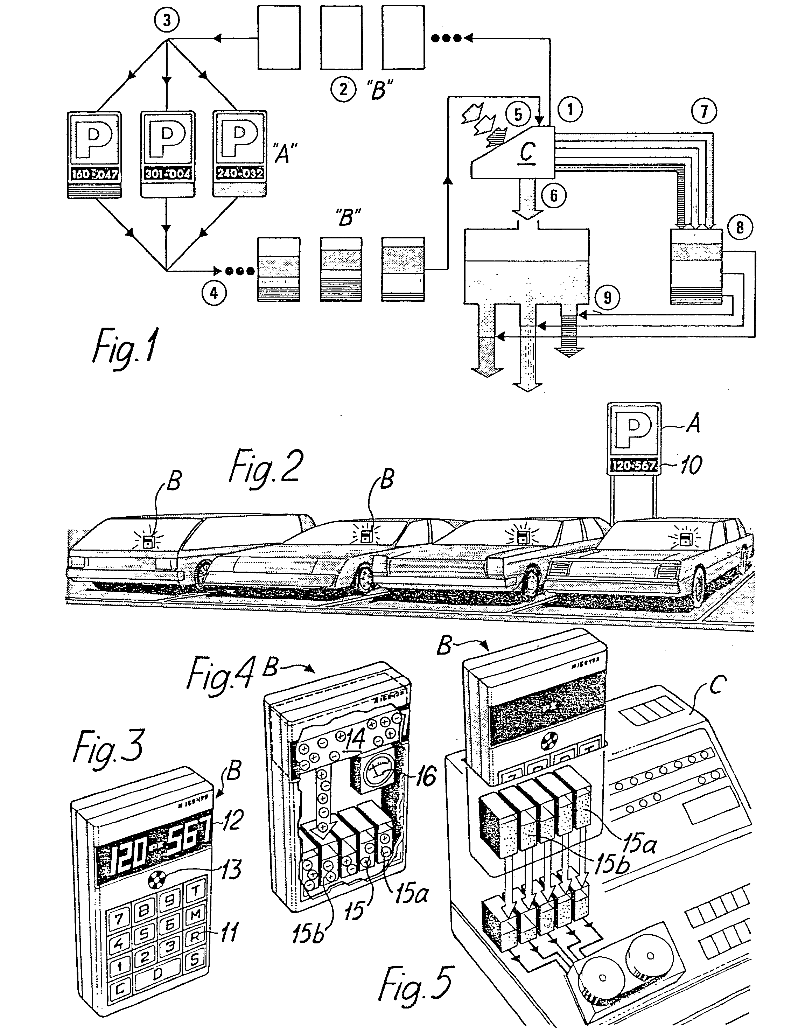

Figure 1 illustrates the separate units working together, namely the parking zone with its parking zone sign, having the reference "A", a meter "B" pertaining to the vehicle and/or at the disposal of the vehicle's owner, and a terminal "C".

The information on the sign is displayed as a number or ciphers, where a cipher or group of ciphers discloses in code form the cost per unit of time, or per parking occasion, as well as other ciphers further disclosing in code form who has the right to receive payment for the time, or occasion utilized.

The meter pertaining to, or at the disposal of, the vehicle's proprietor contains a push button keyboard by which information from the sign is entered into a cipher indicator, which shows that the meter is in function and operating according to the sign's information.

A debit's indicator can preferably be built along with the cipher indicator.

The meter contains a main memory (main storage device) in which a number of bits of information is stored. Through advance payment, these are represented by a definite amount corresponding to the payment. The meter additionally contains one or more accounting memories (sub storage device) to which information bits are transferred from the main memory during parking, in accordance with the sign's information, and depending upon an inbuilt electronic time meter, and a microprocessor, or electronic circuit.

In reference to figure 1, point 1, it is shown that via the advance payment system the meter is loaded at terminal "C" with a number of information bits under identified markings, which correspond to a previously determined payment. Under a system without advance payment, one could suppose that the information on the main memory is limited. Under reference point 2 it is indicated that three parking meters have loaded their main memory with bits, while the accounting memories are set to zero.

In reference point 3 it is assumed that the motor driver parks, and then deposits in his parking meter the information pertaining to that zone, or the so called tariff number. During parking time the bits from the meter's main memory means are transferred to the accounting memory means which is relevant to the payment receiver who will be payed for that parking zone in particular. Reference point 4 illustrates that the three different meters have filled in, in various degrees, their accounting memories from the main memory means.

Reference point 5 helps to illustrate that as soon as the bits begin to exhaust in the main memory means, the meter can be recharged at terminal "C".

It is illustrated by reference point 6 that the payment for the utilized bits is accounted in a special account, while reference point 7 illustrates that terminal "C" is constructed in such a manner that it set all the accounting memories to zero, and the information obtained thereof is transferred for data processing. Through this data processing, the motorist's advance payments can be transferred from the bits to the respective payment receiver. These payments have been displayed by reference point 9.

In figure 2 is shown a parking zone where four automobiles, having each their parking meter "B", and where the meter is set to the information given by the parking sign as shown. Sign "A" shows a cipher combination indicated by reference numeral 10, which also has been illustrated to "120—567". In reference to figure 3 a meter "B" is shown in perspective, and to this meter the information 10 can be entered through a push button keyboard, 11. A cipher indicator 12 shows the information. A debit indicator 13, is placed on the meter to show that the meter is in function and performing according to the sign's information. It is here important that the meter may be placed in a definite spot under the windshield, in order to enable verification as to the debiting taking place.

Figure 4 shows a schematic partially cutaway view of the meter in accordance with figure 3 and with this view it can be illustrated that the meter is in function, the bits from the main memory means 14 have been transferred to one, or if so desired, more accounting memories, 15, 15a. Figure 4 illustrates that only one accounting memory 15b receives the bits.

A time meter 16 can regulate the length of the time period, or the frequency for every bit which will be transferred from the main memory means 14 to the accounting memory means and one of the accounting memories 15b as this time functions according to an adjusted fee on the tariff number.

In the tariff number at the sign displayed at every parking zone, it has been taken for the sake of illustration that the first cipher gives the time length for maximal parking. The third and second ciphers reveal the parking cost, either per unit of time, or per parking occasion. The figures from four to six reveal the payment receiver who will collect the parking payments.

Figure 5 illustrates how a meter is introduced in a terminal "C" and how the terminal evaluates the contents of the accounting memories together, as well as how the terminal distinguishes the content of these memories in order to be able to begin the successive division of the revenues.

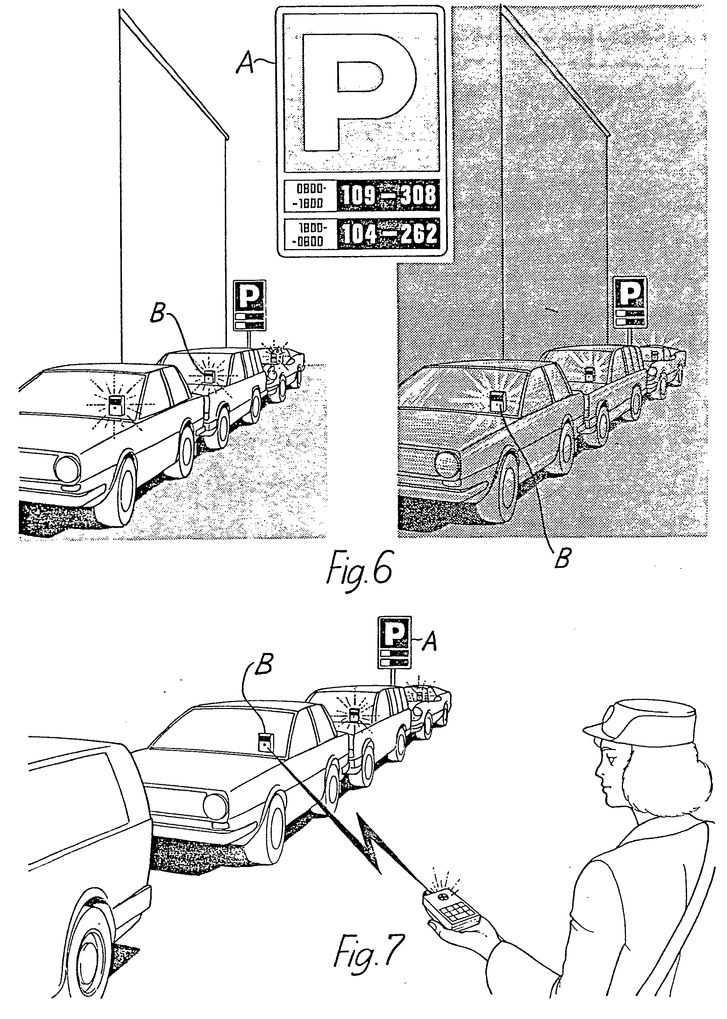

Figure 6 shows how the invention can solve the problem of the so called resident parking in the inner city.

By assigning to the parking zones a certain information or tariff number during daytime, and another tariff number during the night time, it would be possible for the automobile to stay parked in the neighbourhood of the residence around the clock. In figure 6, a tariff number for daytime may be illustrated with "109—308", while the evening tariff number may be represented by "104—262".

Finally figure 7 illustrates the possibilities for the attendant personnel to be are able to check if the meter is functioning and if the correct tariff number has been set with the help of a signal unit.

The above mentioned functions, are strongly tied with how the meter "B" is contructed, and if all or just a part of these functions are to be utilized.

The invention is, of course, not limited to the above exemplified embodiment, but can be modified within the scope of the following claims.

**Claims**

1. A motor vehicle parking system comprising:

a) a sign means (A) for displaying coded parking information (10) relating to the conditions concerning

a1) parking time,

a2) cost,

a3) payment and, optionally,

a4) permission to park, for a vehicle using a parking space associated with said sign means (A),

b) parking meter means (B) and

c) terminal means (C), having means for connecting said parking meter means (B) thereto for receiving and processing stored parking information,

characterized in that the parking meter means (B) has data entry means (11) for entering the parking information displayed on said sign means (A),

cipher indicator means (12), in the form of a display, displaying the information entered on said data entry means (11),

a main memory means (14) for receiving and storing a predetermined number of information bits,

accounting memory means (15, 15a, 15b) comprising at least one accounting memory (15) connected to selectively receive at least some of the information bits from said main memory means (14) for storing said information bits so received,

a time meter (16) and a microprocessor or electronic circuit for selectively transferring at least some of the information bits from said main memory means (14) to said accounting memory means (15, 15a, 15b) during the time period in which the vehicle is parked in said parking space in accordance with said displayed information, and

debit indicator means (13) for indicating that said parking meter means (B) is operating in accordance with the information displayed on said cipher indicator.

2. A motor vehicle parking system according to claim 1, characterized in that the parking meter means (B) includes a push-button keyboard (11), for transferring the said visible information on said sign means (A) to said memory means (14) and to said cipher indicator means (12), which displays the information entended via the push-button keyboard (11).

3. A motor vehicle parking system according to claim 1, characterized in that the bits representing a predetermined advanced payment are registered in the main memory means (14).

4. A motor vehicle parking system according to claim 1, characterized in that the content of said accounting memory means (15, 15a, 15b) is readable by said terminal means (C).

5. A motor vehicle parking system according to claim 1, characterized in that, said terminal means (C) is constructed to cooperate with said parking meter means (B) and thereby evaluate bit transfer in the meter means (B), readout the contents of the or each accounting memory forming the accounting memory means (15, 15a, 15b) as well as to empty the or each accounting memory and separate the content of one accounting memory (15) from the content of any another accounting memory (15a, 15b).

6. A motor vehicle parking system according to claim 1, characterized in that the terminal means (C) is constructed to transfer to the main memory means (14) a number of bits, representing a determined advanced payment amount.

**Patentansprüche**

1. Kraftfahrzeugparkanordnung mit:

a) einen Zeichenmittel (A) zur Anzeige kodierter Parkinformation (10) bezüglich der Zustände betreffs

a1) Parkzeit,

a2) Kosten,

a3) Zahlung und wahlweise

a4) Parkerlaubnis, für ein einen mit dem besagten Zeichenmittel (A) in Verbindung stehenden Parkplatz benutzendes Fahrzeug,

b) Parkuhrmittel (B), und

c) Datenstationsmittel (C) mit Mitteln, um die besagten Parkuhrmittel (B) damit zum Empfangen und Verarbeiten gespeicherter Parkdaten zu verdinden,

dadurch gekennzeichnet, dass die Parkuhrmittel (B) Dateneingabemittel (11) zum Eingeben der auf dem besagten Zeichenmittel (A) angezeigten Parkinformation besitzen,

Ziffernanzeigemittel (12) in der Form einer die auf besagtem Dateneingabemittel (11) eingegebenen Informationen anzeigende Anzeige,

Hauptspeichermittel (14) zum Aufnehmen und Speichern einer vorbestimmten Anzahl Datenbits,

Rechenspeichermittel (15, 15a, 15b) mit mindestens einen Rechenspeicher (15), der so geschaltet ist, dass er selektive mindestens einige der Datenbits vom besagten Hauptspeichermittel (15) empfängt, um die so empfangenen besagten Datenbits zu speichern,

Zeituhr (16) und Mikroprozessor bzw. elektronische Shaltung zur selektiven Uebertragung mindestens einiger der Datenbits vom besagten Hauptspeichermittel (14) zum besagten Rechenspeichermittel (15, 15a, 15b) während der Zeit, während der das Farhzeug entsprechend der besagten angezeigten Information im besagten Parkplatz geparkt wird, und

Belastungsanzeigemittel (13) zum Anzeigen, dass das besagte Parkuhrmittel (B) entsprechend der auf besagter Ziffernanzeige angezeigten Daten arbeitet.

2. Kraftfahrzeugparkanordnung nach Patentanspruch 1, dadurch gekennzeichnet, dass das Parkuhrmittel (B) eine Druckknopftastatur (11) zum Uebertragen der besagten sichtbaren Information auf besagtem Zeichenmittel (A) zum besagten Speichermittel (14) und zum besagten Ziffernanzeigemittel (12) umfasst, das die über die Druckknopftastatur (11) eingegebene Information anzeigt.

3. Kraftfahrzeugparkanordnung nach Patentanspruch 1, dadurch gekennzeichnet, dass die eine vorbestimmte Vorauszahlung darstellenden Bits im Hauptspeichermittel (14) registriert werden.

4. Kraftfahrzeugparkanordnung nach Patentanspruch 1, dadurch gekennzeichnet, dass der Inhalt des besagten Rechenspeichermittels (15, 15a, 15b) durch die besagten Datenstationsmittel (C) lesbar ist.

5. Kraftfahrzeugparkanordnung nach Patentanspruch 1, dadurch gekennzeichnet, dass die besagten Datenstationsmittel (C) so ausgeführt sind, dass sie mit dem besagten Parkuhrmittel (B) zusammenwirken und dadurch die Bitübertragung im Uhrmittel (B) auswerten, den Inhalt des bzw. jedes den Rechenspeicher bildenden Rechenspeichermittels (15, 15a, 15b) auslesen sowie auch den bzw. jeden Rechenspeicher zurücksetzen und den Inhalt eines Rechenspeichers (15) vom Inhalt aller anderen Rechenspeicher (15a, 15b) trennen.

6. Kraftfahrzeugparkanordnung nach Patentanspruch 6, dadurch gekennzeichnet, dass die Datenstationsmittel (C) so ausgeführt sind, dass eine Anzahl von Bits, die einen vorbestimmten Vorauszahlungsbetrag darstellen, zum Hauptspeichermittel (14) übertragen werden.

**Revendications**

1. Système de parking pour véhicules à moteur comprenant:

a) un panneau de signalisation "A" pour afficher une information de parking codée (10) se rapportant aux conditions concernant:
a1) la durée du parking ou du stationnement,
a2) son coût,
a3) le paiement et éventuellement
a4) la permission de parquer ou de stationner, pour un véhicule utilisant un emplacement de parking associé au panneau "A".
b) un parcomètre "B", et
c) un terminal "C" comportant des moyens pour y connecter le parcomètre "B" en vue de recevoir et de traiter de l'information de parking stockée en mémoire,

caractérisé en ce que le parcomètre (B) comporte un dispositif d'entrée de données (11) servant à introduire l'information de parking affichée sur le panneau de signalisation (A),
un indicateur numérique (12) ayant la forme d'un dispositif d'affichage, affichant l'information introduite par le dispositif d'entrée de données (11),

une mémoire priciple (14) pour recevoir et stocker un nombre prédéterminé de bits d'information,
une mémoire de comptabilisation (15, 15a, 15b) comprenant au moins une mémoire de comptabilisation proprement dite (15) connectée pour recevoir sélectivement au moins certains des bits d'information de la mémoire principale (14) en vue de stocker les bits d'information ainsi reçus,
un dispositif de mesure de temps (16) et un microprocesseur ou un circuit électronique pour transférer sélectivement au moins certains des bits d'information de la mémoire principale (14) à la mémoire de comptabilisation (15, 15a, 15b) pendant la période au cours de laquelle le véhicule est parqué dans l'emplacement de parking sur base de l'information affichée, et
un indicateur de débit (13) pour indiquer que le parcomètre (B) fonctionne conformément à l'information affichée sur l'indicateur numérique.

2. Système de parking pour véhicules à moteur suivant la revendication 1, caractérisé en ce que le parcomètre (B) comprend un clavier de boutons-poussoirs (11) destiné à transférer l'information visible sur le panneau (A) dans la mémoire (14) et sur l'indicateur numérique (12) qui affiche l'information introduite par l'intermédiaire du clavier de boutons-poussoirs (11).

3. Système de parking pour véhicules à moteur suivant la revendication 1, caractérisé en ce que les bits représentant un paiement préalable prédéterminé sont enregistrés dans la mémoire principale (14).

4. Système de parking pour véhicules à moteur suivant la revendication 1, caractérisé en ce que le contenu de la mémoire de comptabilisation (15, 15a, 15b) ou de chacune d'elles peut être lu par le terminal (C).

5. Système de parking pour véhicules à moteur suivant la revendication 1, caractérisé en ce que le terminal (C) est construit de manière à coopérer avec la parcomètre (B) et ainsi à évaluer le transfert des bits dans le parcomètre (B), lire le contenu de la ou de chaque mémoire de comptabilisation formant la mémoire de comptabilisation proprement dite (15, 15a, 15b), et vide la ou chaque mémoire de comptabilisation, et sépare le contenu d'une mémoire de comptabilisation (15) du contenu de toute autre mémoire de comptabilisation (15a, 15b).

6. Système de parking pour véhicules à moteur suivant la revendication 1, caractérisé en ce que le terminal (C) est construit pour transférer à la mémoire principale (14) un nombre de bits représentant une quantité prédéterminée payée d'avance.

**0 006 079**

Fig.1

Fig.2

P — A
120·567 — 10

Fig.3

Fig.4

Fig.5

C

120·567 — 12
13
11
14
16
15a
15b
15
15a
15b

0 006 079

*Fig.6*

*Fig.7*

2